# EUROPÄISCHE PATENTSCHRIFT

(11) **EP 3 311 450 B1**
(45) Veröffentlichungstag und Bekanntmachung des Hinweises auf die Patenterteilung: **24.08.2022**
(21) Anmeldenummer: 15730762.0
(22) Anmeldetag: 18.06.2015
(51) Int. Cl.: H01Q 21/08, H01Q 1/22, H01Q 19/19, H01P 5/107

(54) **HOHLLEITEREINKOPPLUNG FÜR EINEN ZEILENSCANNER**
WAVEGUIDE COUPLING FOR A LINE SCANNER
INJECTION PAR GUIDE D'ONDES POUR UN DISPOSITIF DE BALAYAGE LINÉAIRE

(43) Veröffentlichungstag der Anmeldung: 25.04.2018
(73) Patentinhaber: VEGA Grieshaber KG, 77709 Wolfach (DE)
(72) Erfinder: WÄLDE, Steffen, 78078 Niedereschach (DE); SCHULTHEISS, Daniel, 78132 Hornberg (DE)
(74) Vertreter: Maiwald Patent- und Rechtsanwaltsgesellschaft mbH
(86) Internationale Anmeldenummer: PCT/EP2015/063743
(87) Internationale Veröffentlichungsnummer: WO 2016/202394

(56) Entgegenhaltungen:
- DE-A1- 2 533 179
- DE-A1-102012 106 938
- US-A- 6 061 035
- US-A1- 2004 150 554
- US-B2- 7 728 772

## Beschreibung

### Gebiet der Erfindung

Die Erfindung betrifft die dreidimensionale Füllstandmessung. Insbesondere betrifft die Erfindung eine Hohlleitereinkopplung für eine Füllstandradarantenne, die insbesondere als Zeilenscanner ausgeführt sein kann, eine Füllstandradarantenne mit einer entsprechenden Hohlleitereinkopplung, sowie ein Füllstandmessgerät mit einer Füllstandradarantenne.

### Hintergrund

Im Bereich der dreidimensionalen Füllstandmessung mit Radarmessgeräten ergeben sich völlig neue Anwendungszielsetzungen. Konnte bislang bei Schüttgutmessungen nur ein grober Messwert der aktuellen Füllhöhe ermittelt werden, so eröffnet sich bei der dreidimensionalen Füllstandmessung die Möglichkeit der Erfassung des Volumens und der Masse des in einem Behälter enthaltenen Schüttguts.

Auch bei bewegten Flüssigkeiten kann das Erfassen einer Oberflächentopologie zur Bestimmung von Füllständen oder Volumina vorteilhaft sein. Derartige bewegte Flüssigkeiten können beispielsweise beim Einsatz von Rührvorrichtungen und den daraus erzeugten Strömungsbildem an der Flüssigkeitsoberfläche (sog. Tromben) auftreten. Eine Bestimmung der Oberflächentopologie kann darüber hinaus Rückschlüsse auf weitere Größen, wie beispielsweise die Viskosität oder den Durchmischungsgrad des Füllgutes, erlauben.

Zur Erfassung der Oberflächentopologie wird die Füllgutoberfläche mit einem Messstrahl abgetastet. Zur Steuerung des Messstrahls kann beispielsweise ein eindimensionales Array aus einer Vielzahl von Strahlerelementen verwendet werden, welches eine eindimensionale Abtastung der Füllgutoberfläche erlaubt (sog. Zeilenscanner). Wird dieses Array darüber hinaus rotiert, kann eine zweidimensionale Abtastung der Oberfläche erfolgen.

Dokument US 2004/0150554 A1 beschreibt eine aktive, elektronisch gescannte Antenne für Radar-Systeme, welche mehrere Hohlleiter und Strahlerelemente aufweist.

Dokument DE 10 2012 106 938 A1 betrifft ein Verfahren zur abbildenden Erfassung eines Radargesichtsfelds in der Prozessautomatisierungstechnik mit Hilfe einer Radarvorrichtung.

Dokument US 7 728 772 B2 betrifft eine Front-End-Vorrichtung mit einem Array von Hornstrahlantennen.

Dokument DE 25 33 179 A1 beschreibt eine Rundsicht-Radarantenne mit Höhenerfassung.

### Zusammenfassung der Erfindung

Es ist eine Aufgabe der Erfindung, eine kleine Antennenbauform bei gleichzeitiger guter Fokussierung des Sendesignals bereitzustellen.

Diese Aufgabe wird durch die Gegenstände des unabhängigen Patentanspruchs gelöst. Weiterbildungen der Erfindung ergeben sich aus den Unteransprüchen und den im Folgenden beschriebenen Ausführungsformen.

Ein erster Aspekt der Erfindung betrifft eine Hohlleitereinkopplung für eine Füllstandradarantenne, welche eine Anordnung einer Vielzahl an Strahlerelementen sowie eine Anordnung einer Vielzahl an Hohlleitern aufweist. Jedes der Strahlerelemente dient der Aussendung und/oder dem Empfang eines Radarsignals und ist jeweils einem der Hohlleiter zugeordnet.

Das entsprechende Strahlerelement sendet ein Sendesignal aus, welches in den Hohlleiter eingekoppelt wird, der dann das eingekoppelte Sendesignal zu einem Antennenelement einer Antennenanordnung weiterleitet, wenn die Antennenanordnung an die Hohlleitereinkopplung angeschlossen ist.

Die Antennenanordnung weist eine Vielzahl an Antennenelementen auf, wobei jedes dieser Antennenelemente zum Abstrahlen oder zum Empfangen des entsprechenden Radarsignals ausgeführt ist. Über Verfahren zur digitalen Strahlumformung kann die Richtung eingestellt werden, in welche die Antenne "sieht", sodass die Füllgutoberfläche entlang einer Zeile (im Falle eines eindimensionalen Arrays an Strahlerelementen) oder zweidimensional (im Falle eines zweidimensionalen Arrays an Strahlerelementen) abgetastet werden kann.

Jeder der Hohlleiter weist eine antennenseitig angeordnete Hohlleiteröffnung auf, um das eingekoppelte Sendesignal in die Antenne oder einen daran angeschlossenen, weiterführenden Hohlleiter abzustrahlen.

Der maximale Abstand zwischen zwei benachbart angeordneten antennenseitigen Hohlleiteröffnungen ist beispielsweise kleiner oder gleich der halben Wellenlänge des Sendesignals. Die Mittenfrequenz des Sendesignals kann 79 GHz betragen, was einer Wellenlänge von ca. 3,8 mm entspricht, so dass der maximale Abstand 1,9 mm beträgt.

Jedes Strahlerelement kann an eine eigene Elektronikeinheit angeschlossen sein, welche die (von der Antenne) abzustrahlenden Radarsignale erzeugt oder (von der Antenne) empfangene Radarsignale weiterverarbeitet. Die Elektronikeinheit ist beispielsweise über eine Mikrostreifenleitung an das entsprechende Strahlerelement angeschlossen und wird im Regelfall eine Abmessung aufweisen, die größer ist als die halbe Wellenlänge des Sendesignals.

Der Abstand benachbarter Strahlerelemente ist größer als der Abstand zwischen zwei benachbarten antennenseitigen Hohlleiteröffhungen, und beispielsweise größer als die halbe Wellenlänge (λ/2) des Sendesignals.

Beispielsweise ist der Abstand benachbarter Strahlerelemente doppelt so groß wie der Abstand benachbarter antennenseitiger Hohlleiteröffnungen.

Auf diese Weise ist es möglich, auch bei verhältnismäßig großen Elektronikeinheiten dennoch geringe Abstände zwischen den einzelnen Hohlleiteröffnungen, die zur Antenne hin gewandt sind, zu erzielen.

Gemäß einer weiteren Ausführungsform der Erfindung ist jedes zweite Strahlerelement entlang einer ersten, gerade verlaufenden Linie angeordnet. Die verbleibenden Strahlerelemente sind hingegen entlang einer zweiten, zur ersten Linie parallel verlaufenden Linie angeordnet. Der Abstand der beiden Linien kann beispielsweise im Bereich einer einfachen Wellenlänge des Sendesignals liegen. Er kann aber auch größer oder kleiner sein. Aufgrund dieses Versatzes wird Platz für die Elektronikeinheiten, die auch als HF-Frontend bezeichnet werden, geschaffen.

Auch ist es möglich, nur jedes dritte oder beispielsweise jedes vierte Strahlerelement entlang einer ersten gerade verlaufenden Linie anzuordnen, das nächste Drittel oder Viertel an Strahlerelementen entlang einer zweiten Linie und das nächste Drittel bzw. Viertel der Strahlerelemente entlang einer dritten Linie. Im Fall von vier Gruppen an Strahlerelementen würde dann das letzte Viertel an Strahlerelementen entlang einer vierten Linie angeordnet sein, wobei alle drei bzw. vier Linien parallel verlaufen, jedoch einen deutlichen Abstand zueinander aufweisen, sodass ausreichend Platz für die Elektronikeinheiten geschaffen wird.

Gemäß einer weiteren Ausführungsform der Erfindung sind die Strahlerelemente zumindest teilweise auf verschiedenen Ebenen angeordnet. Beispielsweise befinden sich die erste Linie auf einer ersten Ebene (auf einem ersten Substrat) und die zweite Linie auf einer zweiten Ebene, die darüber oder darunter liegt (auf einem zweiten Substrat). Hierdurch kann zusätzlicher Platz für die Elektronikeinheiten geschaffen werden.

Gemäß einer weiteren Ausführungsform der Erfindung sind die antennenseitigen Hohlleiteröffnungen entlang einer weiteren Linie angeordnet, die sich in einer anderen Ebene befindet und typischerweise oberhalb und mittig zwischen den ersten beiden Linien positioniert ist.

Gemäß einer weiteren Ausführungsform der Erfindung weist zumindest einer der Hohlleiter (oder sämtliche Hohlleiter) einen gekrümmten oder gewinkelten Verlauf auf, sodass das dem Hohlleiter zugeordnete Strahlerelement nicht direkt unterhalb (bzw. oberhalb) der antennenseitigen Hohlleiteröffnung angeordnet ist, sondern seitlich versetzt dazu.

Gemäß einer weiteren Ausführungsform der Erfindung weisen sämtliche Hohlleiter identische Längen auf, sodass identische Elektronikeinheiten verwendet werden können.

Gemäß einer weiteren Ausführungsform der Erfindung weisen sämtliche Hohlleiter identische Formen auf.

Die Hohlleiteröffnungen dienen als Schnittstellen zum Anschluss der Hornantennen, der Parabolrinne oder anderer fokussierender Einrichtungen.

Es werden demnach die Sendesignale mehrerer, versetzt zueinander angeordneter Strahlerelemente mithilfe eines Hohlleiternetzwerks entlang einer Linie zusammengeführt. Vorteilhaft erweist sich hierbei die Verwendung von Rechteckhohlleitern. Es können aber auch Rundhohlleiter oder Hohlleiter mit anderen Querschnitten verwendet werden.

Bei Verwendung von Rechteckhohlleitern können die Hohlleiteröffnungen so angeordnet sein, dass die Schmalseiten der Hohlleiter in einer Zeile angeordnet sind, um möglichst keine Abstände zwischen den Hohlleitern realisieren zu können. In anderen Worten sind die breiteren Seiten der Hohlleiteröffnungen benachbart zueinander angeordnet.

Ein weiterer Aspekt der Erfindung betrifft eine Füllstandradarantenne mit einer oben und im Folgenden beschriebenen Hohlleitereinkopplung. Beispielsweise ist die Füllstandradarantenne als Hornstrahlerarrayantenne ausgeführt. Sie kann auch, gemäß einer weiteren Ausführungsform der Erfindung, als Parabolrinne ausgeführt sein.

Gemäß einer weiteren Ausführungsform der Erfindung ist die Füllstandradarantenne als eindimensionale Arrayantenne ausgeführt (sog. Zeilenscanner). Gemäß einer weiteren Ausführungsform der Erfindung ist die Füllstandradarantenne als zweidimensionale Arrayantenne ausgeführt, sodass die Füllgutoberfläche zweidimensional abgetastet werden kann, ohne dass die Antenne hierbei rotiert werden müsste.

Gemäß einem weiteren Aspekt der Erfindung ist ein Füllstandmessgerät mit einer oben und im Folgenden beschriebenen Füllstandradarantenne angegeben. Beispielsweise ist das Füllstandmessgerät zum Bestimmen einer Topologie einer Füllgutoberfläche ausgeführt.

Im Folgenden werden Ausführungsbeispiele der Erfindung mit Bezug auf die Figuren detailliert beschrieben.

### Kurze Beschreibung der Figuren

Fig. 1 zeigt ein Füllstandmessgerät gemäß einem Ausführungsbeispiel der Erfindung.
Fig. 2 zeigt eine Parabolrinne gemäß einem Ausführungsbeispiel der Erfindung.
Fig. 3a zeigt ein planares Strahlerelement auf einer Leiterplatte.
Fig. 3b zeigt eine Hohlleitereinkopplung.
Fig. 4 zeigt eine Vielzahl an Strahlerelementen, die entlang einer geraden Linie angeordnet sind.
Fig. 5 zeigt eine Vielzahl an Strahlerelementen, die entlang zweier parallel verlaufender geraden Linien angeordnet sind.
Fig. 6 zeigt eine Hohlleitereinkopplung gemäß einem Ausführungsbeispiel der Erfindung.
Fig. 7 zeigt eine Seitenansicht einer Hohlleitereinkopplung gemäß einem weiteren Ausführungsbeispiel der Erfindung.
Fig. 8 zeigt die Hohlleitereinkopplung der Fig. 7 in perspektivischer Darstellung.
Fig. 9 zeigt eine Parabolrinne gemäß einem Ausführungsbeispiel der Erfindung.
Fig. 10 zeigt eine Hornantennenarrayanordnung gemäß einem Ausführungsbeispiel der Erfindung.

Die Darstellungen in den Figuren sind schematisch und nicht maßstäblich. Werden in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

### Detaillierte Beschreibung von Ausführungsbeispielen

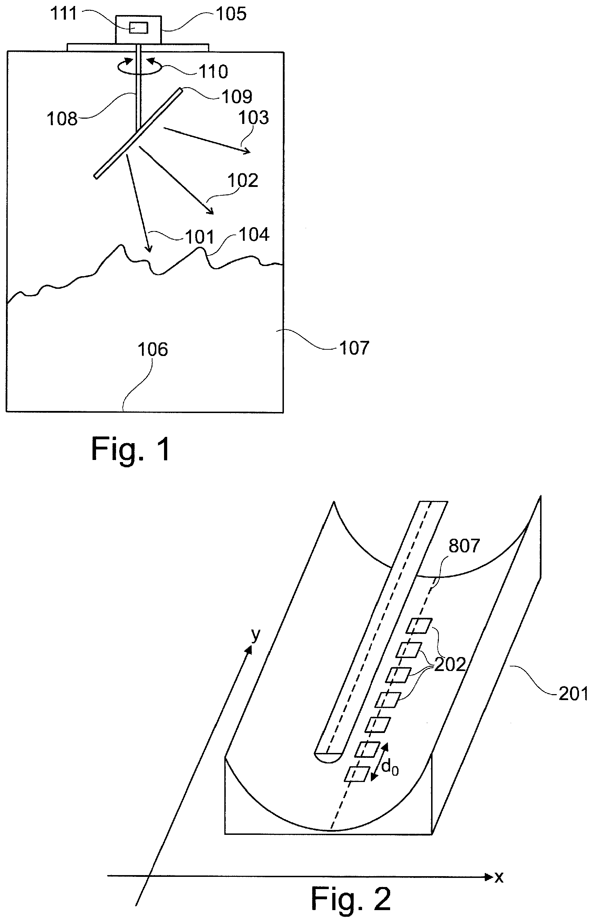

Fig. 1 zeigt ein topologieerfassendes Füllstandmessgerät 105, beispielsweise in Form eines Füllstandradarmessgeräts, welches die oben und im Folgenden beschriebene Füllstandradarantenne aufweisen kann. Das Messgerät ist in der Lage, Echosignale oder Echokurven aus unterschiedlichen Winkelbereichen 101, 102, 103 zu erfassen. Zu jeder erfassten Echokurve wird die Distanz zum jeweiligen Punkt der Oberfläche des Füllguts oder Schüttguts 104 ermittelt. Durch numerische Integration dieser Distanzwerte und unter Postulierung einer ebenen Oberfläche 106 unter dem Schüttgut bzw. bei bekannter Behältergeometrie kann das Volumen der Schüttguthalde 107 ermittelt werden. Bei bekannter Dichte lässt sich weiterhin die Masse des Schüttguts berechnen.

Das Füllstandmessgerät 105 weist eine Antennenhalterung 108 zur Befestigung einer Antennenanordnung 109 (Füllstandradarantenne) auf. Je nach Ausgestaltung des Füllstandmessgeräts kann die Antennenhalterung 108 ein mechanisches Verstellen der Hauptstrahlrichtung der Antenne, beispielsweise durch Drehen 110 oder durch Verkippen, ermöglichen. Weiterhin kann das Füllstandmessgerät zur Durchführung einer digitalen Strahlumformung ausgeführt sein. Das Füllstandmessgerät weist hierbei eine aus mehreren Sende- und/oder Empfangselementen bestehende Antennenanordnung 109 sowie eine dazu passende Auswerteeinheit 111 zur Implementierung eines Verfahrens der digitalen Strahlumformung auf.

Fig. 2 zeigt eine Antennenanordnung zur topologieerfassenden Füllstandmessung. In Kombination mit einer drehbaren Halterung 108 (vgl. Fig. 1) kommt beispielsweise eine Parabolrinne 201 zum Einsatz. Die Parabolrinne fokussiert die von den Antennenelementen 202 abgestrahlten und/oder empfangenen elektromagnetischen Wellen entlang der x-Richtung (Querrichtung). Die Fokussierung der entsprechenden Signale entlang der y-Richtung (Längsrichtung) erfolgt hingegen erst nach der Erfassung der empfangenen Signale innerhalb der Auswerteeinheit 111 (vgl. Fig. 1) durch digitale Strahlumformung (DBF). Dies ermöglicht insbesondere auch die gezielte Steuerung der Hauptempfangsrichtung der Antennenanordnung in der y-Richtung.

In Kombination mit einer statischen Halterung 108 wird hingegen ein zweidimensionales Antennenarray verwendet, welches eine Vielzahl von Sende- und/oder Empfangselementen entlang der x- als auch entlang der y-Richtung verteilt aufweist. Die Auswerteeinheit verknüpft die von den Sende-/Empfangselementen empfangenen Signale gemäß dem Verfahren der zweidimensionalen digitalen Strahlumformung und kann hierbei gezielt eine Ablenkung der Hauptempfangsrichtung sowohl entlang der x- als auch entlang der y-Achse herbeiführen.

Zur Vermeidung von Gitterkeulen bei der digitalen Strahlumformung (sog. Grating-Lobes) sollte die physikalische Distanz zwischen zwei benachbarten Antennenelementen 202 kleiner oder gleich der halben Wellenlänge der verwendeten Radarsignale sein. Diese Einschränkung führt regelmäßig zu einer hohen Zahl an Antennenelementen und somit zu einem hohen Schaltungsaufwand und damit verbundenen hohen Herstellungskosten des Radargeräts.

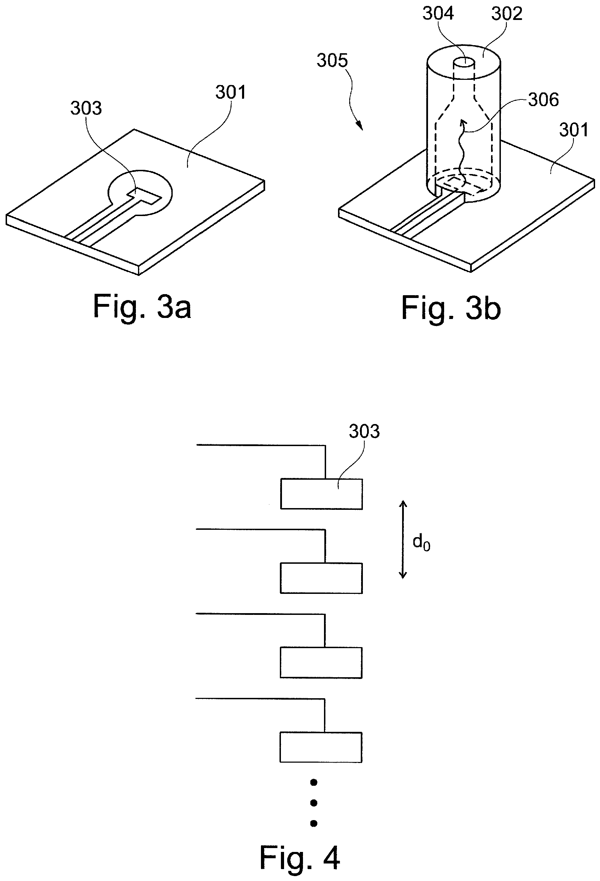

Fig. 3a und 3b zeigen den schematischen Aufbau eines Hohlleiterübergangs 305 zwischen einem auf einer Leiterplatte 301 angeordneten Strahlerelement 303 und einem Hohlleiter 302. Mit Hilfe des Hohlleiters 302 werden die von dem Strahlerelement 303 ausgesendeten elektromagnetischen Wellen 306, die das Radarsignal, das vom HF-Frontend erzeugt und über eine Mikrostreifenleitung an das Sendeelement 303 geführt wurde, abbilden, an die Antennenanordnung geleitet (nicht dargestellt). Ebenso können die von der Antennenanordnung empfangenen Signale über den Hohlleiter der Elektronik zugeführt werden. Ein derartiger Hohlleiterübergang 305 kann zur konventionellen radarbasierten Füllstandmessung verwendet werden, bei der das Radargerät nur eine Antenne aufweist.

Über die planare Patchantenne 303, oder allgemeiner das Strahlerelement 303, wird ein elektromagnetisches Wechselfeld in die platinenseitige Öffnung des Hohlleiters eingekoppelt, welche senkrecht zur Normalen der Platine steht. Der Innenquerschnitt 304 des Hohlleiters kann dabei rund oder rechteckig geformt sein oder auch beliebige andere Geometrien annehmen. Anstelle einer Patchantenne kann auch eine andere Geometrie, wie ein Leitungsstumpf, verwendet werden. Es sind ebenfalls weitere Konstruktionen zur Verbesserung der Ankopplung an den Hohlleiter, wie ein senkrecht stehender Stift und zusätzliche Resonatoren auf der Unterseite der Platine, möglich.

Fig. 4 zeigt eine Anordnung einer Vielzahl an Strahlerelementen 303 entlang einer gerade verlaufenden Linie. Der Abstand zwischen benachbart angeordneten Strahlerelementen beträgt d₀, beispielsweise λ/2.

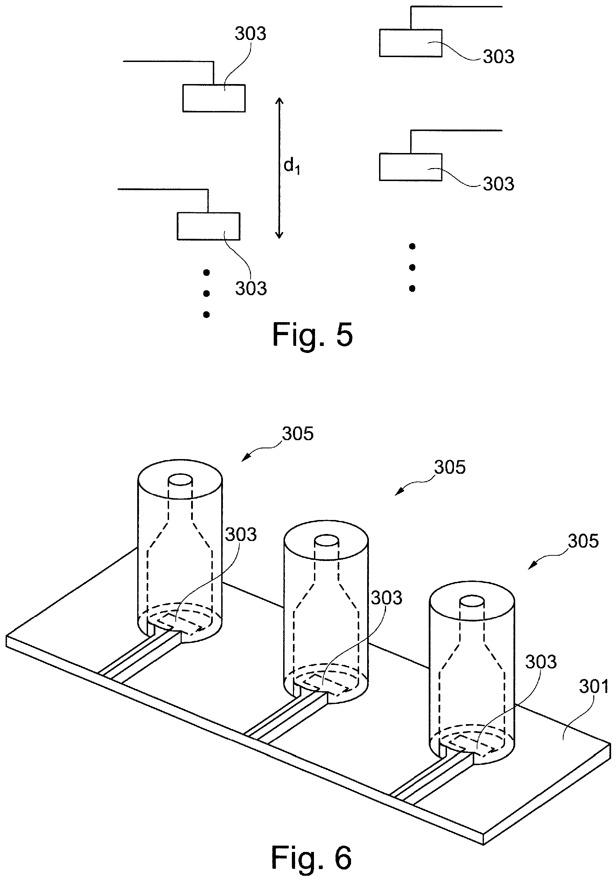

Soll nun ein Antennenzeilenarray bereitgestellt werden, mit dem die Füllgutoberfläche entlang einer Zeile mittels digitaler Strahlumformung abgetastet werden kann, kann die Hohlleitereinkopplung, wie in Fig. 6 gezeigt, entlang einer gerade verlaufenden Linie angeordnet werden. Auf diese Weise kann eine nichtplanare Arrayantenne 201 (vgl. Fig. 2) an ein Hochfrequenz-Frontend angebunden werden. Gemäß dem Ausführungsbeispiel der Fig. 6 sind die Strahlerelemente 303 in Form von Patchantennen ausgebildet. Es sind auch andere Strahlerelemente, wie beispielsweise ein Leitungsstumpf oder ein senkrecht stehender Stift, möglich. Ebenfalls können zur Verbesserung der Ankopplung Resonatoren auf der Unterseite der Leiterplatte eingesetzt werden oder die Speisung der Hohlleiter von der Unterseite der Leiterplatte erfolgen.

Da die oben beschriebenen Leiterplatten-Hohlleiterübergänge 305 meist eine zur Wellenlänge Lambda große räumliche Ausdehnung aufweisen, ist es möglich, mehr Raum für die Unterbringung der Elektronikeinheiten zu schaffen, indem hierfür besonders geformte Hohlleiter verwendet werden. Auf diese Weise ist es möglich, auch bei verhältnismäßig großen Elektronikeinheiten die Hohlleiteröffnungen dennoch mit einem Abstand von kleiner gleich λ/2 anzuordnen.

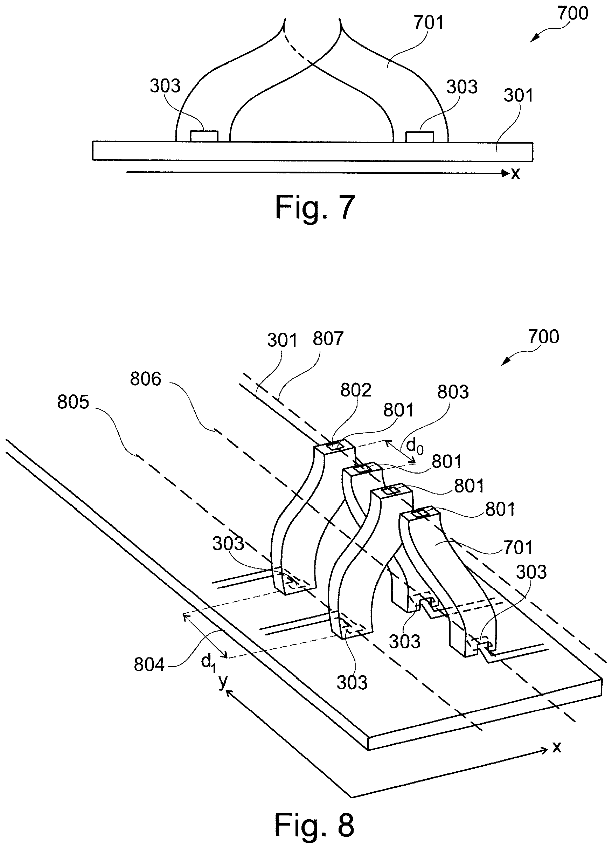

Hierbei können gemäß Fig. 5 die Strahlerelemente 303, beispielsweise in Form von Patchantennen, nicht mehr entlang einer gerade verlaufenden Linie (wie in Fig. 4), sondern versetzt zueinander, also entlang von zwei oder mehr gerade verlaufenden Linien, auf einem oder mehreren Substratmaterialien 301 aufgebracht werden. Zur Vereinigung der von den versetzten Strahlerelementen ausgesendeten bzw. empfangenen Radarsignale entlang einer Zeile werden die aufgesetzten Hohlleiter 701 (siehe Fig. 7 und 8) verwendet, welche geschwungen oder winklig aufgebaut sind. Das so entstandene Hohlleiterarray kann für verschiedenste Antennentypen, wie beispielsweise einem Hornstrahlerarray oder einer Parabolrinne 201, als Einkopplung dienen.

Durch diese Aufbautechnik vergrößert sich der Abstand zwischen den einzelnen Mikrostreifenleitungs-Hohlleiterübergängen 305 und es entsteht mehr Raum für aktive und passive Hochfrequenz- und Elektronikbauelemente (vgl. Fig. 4 und Fig. 5: d₀ ("neuer" Abstand) <= d₁ ("alter" Abstand)).

Außerdem kann für einen einzelnen Übergang 305 mehr Platz beansprucht und dennoch eine Antennenspeiseanordnung aus Hohlleiteröffnungen 802 mit einem Abstand kleiner gleich λ/2 aufgebaut werden.

Weiterhin können die versetzten Einspeiseelemente 303 beliebig auf der Platine 301 verteilt sein und durch die Hohlleiteröffnungen in eine Zeile 801 zusammengeführt werden. Ebenfalls ist es möglich, dass die Übergänge 305 in mehreren Platinenebenen angebracht sind, um somit durch einen gestapelten Platinenaufbau nochmals mehr nutzbare Platinenfläche zu erhalten.

Der Querschnitt 304 der Hohlleiter kann beliebige Geometrien annehmen. Für einen kompakten Aufbau erweist es sich als vorteilhaft, wenn die Hohlleiteröffnungen 802 einen rechteckigen Querschnitt aufweisen und Schmalseiten zu einer Zeile 801 angeordnet sind, wie dies in der Fig. 8 zu sehen ist. Ebenfalls können sich auch die Geometrien der Querschnittsflächen ändern, sodass beispielsweise die Rundhohlleiter in Rechteckhohlleiter übergehen.

Ebenfalls als vorteilhaft bezüglich der Bauform und möglicher Signalverzerrungen kann es sich erweisen, die Hohlleiter so zu dimensionieren, dass die sich ausbreitenden Frequenzen ausschließlich die Grundmode des Hohlleiters anregen.

Ein weiterer vorteilhafter Aufbau ist es, die Biegungen des Hohlleiters so zu dimensionieren, dass das elektrische Feld möglichst wenig gestört wird.

Bei dieser Aufbautechnik ist es nicht notwendig, dass die einzelnen Hohlleiter 701 exakt dieselbe Länge aufweisen. Durch eine Kalibration in der nachfolgenden digitalen Signalverarbeitung können Differenzen in der Weglänge herausgerechnet werden, da sie bekannt sind.

Es ist ebenfalls möglich, eine solche Aufbautechnik auch bei einem zweidimensionalen Antennenarray einzusetzen, bei dem die Hauptabstrahlrichtung sowohl in x- als auch in y-Richtung geschwenkt werden kann.

Somit ist ein kompakter Aufbau von Antennenelementen und deren HF-Frontends möglich. Die Antennenelemente müssen hinsichtlich der digitalen Strahlumformung einen genau definierten räumlichen Abstand aufweisen. Dieser Raum ist antiproportional zum verwendeten Frequenzbereich des Radargeräts und somit bei hohen Frequenzen nur begrenzt vorhanden. Die vorliegende Erfindung eröffnet die Möglichkeit, einen größeren Bereich erschließen zu können, auf dem elektronische Bauelemente untergebracht werden können.

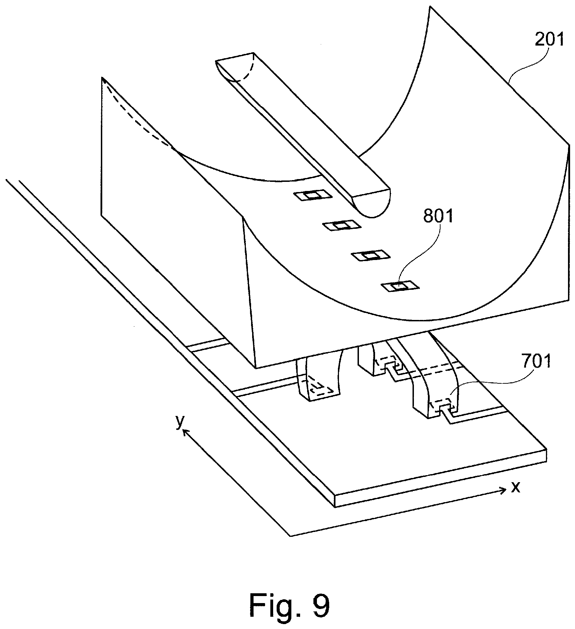

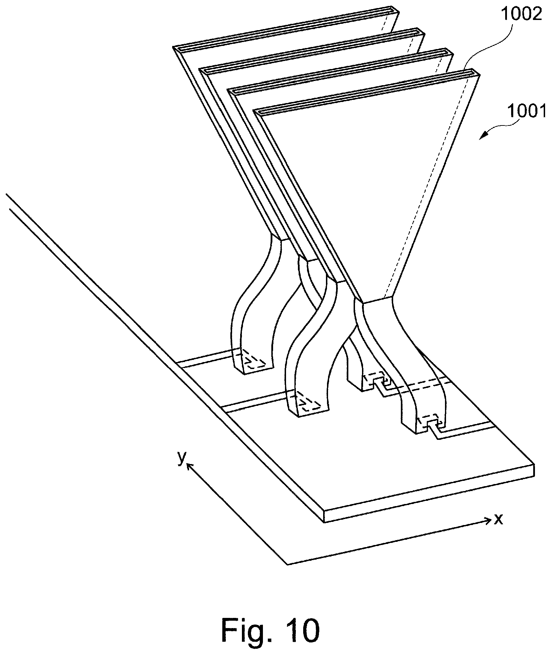

Fig. 9 zeigt eine Parabolrinne mit einer oben beschriebenen Hohlleitereinkopplung. Fig. 10 zeigt eine eindimensionale Hornarrayantenne 1001 mit auf die antennenseitigen Hohlleiteröffnungen aufgesetzten Hornantennen 1002. Durch die Parabolrinne der Antenne der Fig. 9 bzw. die Hornantennen der Fig. 10 kann eine Fokussierung des Sendestrahls in Querrichtung (x-Richtung) erfolgen.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Hohlleitereinkopplung für eine Füllstandradarantenne, aufweisend:
eine Anordnung einer Vielzahl an Strahlerelementen (303) entlang wenigstens einer ersten gerade verlaufenden Linie (805) und einer zweiten gerade verlaufenden Linie (806) zur Aussendung und/oder zum Empfang jeweils eines Radarsignals (306);
eine Anordnung einer Vielzahl an Hohlleitern (701), einen für jedes Strahlerelement, wobei jeder Hohlleiter zum Leiten des Radarsignals des entsprechenden Strahlerelements zu einem Antennenelement (202) einer Antennenanordnung (109, 201) oder umgekehrt, welche eine Vielzahl an Antennenelementen (202) zum Abstrahlen und/oder zum Empfangen jeweils eines der Radarsignale in Richtung eines Füllgutes bzw. vom Füllgut aufweist, ausgeführt ist;
wobei die Hohlleiter jeweils eine antennenseitige Hohlleiteröffnung (802) aufweisen, wobei die Hohlleiteröffnungen entlang einer dritten Linie (807) angeordnet sind, und wobei der Abstand (803) wenigstens zweier benachbarter und entlang der dritten Linie angeordneter Hohlleiteröffnungen (802) zueinander kleiner oder gleich der halben Wellenlänge des Radarsignals beträgt; und
der Abstand (804) wenigstens zweier entlang der ersten Linie oder entlang der zweiten Linie benachbarter Strahlerelemente (303) größer ist als die halbe Wellenlänge des Sendesignals.

2. Hohlleitereinkopplung nach Anspruch 1, wobei der Abstand (804) benachbarter Strahlerelemente (303) entlang der ersten Linie oder entlang der zweiten Linie doppelt so groß ist wie der Abstand benachbarter antennenseitiger Hohlleiteröffnungen (802).

3. Hohlleitereinkopplung nach einem der vorhergehenden Ansprüche,
wobei jedes zweite Strahlerelement (303) entlang der ersten gerade verlaufenden Linie (805) angeordnet ist;
wobei die verbleibenden Strahlerelemente entlang der zweiten, zur ersten Linie (805) parallelen Linie (806) angeordnet sind.

4. Hohlleitereinkopplung nach einem der vorhergehenden Ansprüche, wobei die Strahlerelemente (303) zumindest teilweise auf verschiedenen Ebenen angeordnet sind.

5. Hohlleitereinkopplung nach einem der vorhergehenden Ansprüche, wobei zumindest einer der Hohlleiter (701) ein gekrümmter oder gewinkelter Hohlleiter ist, so dass das dem Hohlleiter zugeordnete Strahlerelement (303) nicht direkt unterhalb der antennenseitigen Hohlleiteröffnung angeordnet ist, sondern seitlich versetzt dazu.

6. Füllstandradarantenne (109) mit einer Hohlleitereinkopplung nach einem der Ansprüche 1 bis 5.

7. Füllstandradarantenne (109) nach Anspruch 6, ausgeführt als Hornstrahlerarrayantenne.

8. Füllstandradarantenne (109) nach Anspruch 6, ausgeführt als Parabolrinne (201).

9. Füllstandradarantenne (109) nach einem der Ansprüche 6 bis 8, ausgeführt als eindimensionale Arrayantenne.

10. Füllstandradarantenne nach einem der Ansprüche 6 bis 8, ausgeführt als zweidimensionale Arrayantenne.

11. Füllstandmessgerät (105) mit einer Füllstandradarantenne (109) nach einem der Ansprüche 6 bis 10.

12. Füllstandmessgerät (105) nach Anspruch 11, ausgeführt zum Bestimmen einer Topologie einer Füllgutoberfläche (104).

## Claims

1. Waveguide coupling configuration for a fill level radar antenna, comprising:
an assembly of a plurality of radiator elements (303) along at least a first straight line (805) and a second straight line (806) for transmission and/or receipt of a respective radar signal (306);
an arrangement of a plurality of waveguides (701), one of the waveguides being provided for each of the radiator elements,
wherein each waveguide is configured for guiding the radar signals of the respective radiator elements to an antenna element (202) of an antenna arrangement (109, 201) or inverted, which comprises a plurality of antenna elements (202) for transmitting and/or receiving a respective one of the radar signals towards or from a filling material;
wherein the waveguides comprises an respective waveguide opening on an antenna side,
wherein the waveguide openings are arranged along a third line (807), and
wherein the distance (803) of at least two adjacent and along the third line (807) arranged waveguide openings (802) are less than or equal to one half of a wavelength of the respective radar signal with respect to each other; and the distance (804) of at least two adjacent, along the frist line or second line,
radiator elements (303) is greater than one half of a wavelength of the transmit radar signal.

2. Waveguide coupling configuration according to claim 1,
wherein the distance (804) of adjacent radiator elements (303) along the first line or along the second line is twice as great as a distance of adjacent waveguide openings (802) on an antenna side.

3. Waveguide coupling configuration according to one of the previous claims,
wherein every second radiator element (303) is arranged along the first straight line (805),
wherein remaining radiator elements are arranged along the second line (806) being parallel with respect to the first line (805).

4. Waveguide coupling configuration according to one of the previous claims, wherein the radiator elements (303) are arranged at least partially on different planes.

5. Waveguide coupling configuration according to one of the previous claims, wherein at least one of the waveguides (701) is a curved or angular waveguide, such that the radiator element (303) associated with a respective waveguide is not arranged directly below a waveguide opening on an antenna side, but is arranged laterally offset with respect thereto.

6. Fill level radar antenna (109) with a waveguide coupling configuration according to one of the claims 1 to 5.

7. Fill level radar antenna (109) according to claim 6, executed as a horn radiator array antenna.

8. Fill level radar antenna (109) according to claim 6, executed as a parabolic trough.

9. Fill level radar antenna (109) according to one of the claims 6 to 8, executed as a one-dimensional array antenna.

10. Fill level radar antenna according to one of the claims 6 to 8, executed as a two-dimensional array antenna.

11. Fill level measurement device (105) with a fill level radar antenna (109) according to one of the claims 6 to 10.

12. Fill level measurement device (105) according to claim 11, executed for determining a topology of a filling material surface (104).

## Revendications

1. Injection par guide d'ondes pour une antenne de radar de niveau de remplissage, comportant :
un agencement d'une pluralité d'éléments rayonnants (303) le long d'au moins une première ligne (805) droite et une deuxième ligne (806) droite pour émettre et/ou recevoir respectivement un signal radar (306) ;
un agencement d'une pluralité de guides d'ondes (701), un pour chaque élément rayonnant, chaque guide d'ondes étant conçu pour guider le signal radar de l'élément rayonnant correspondant à un élément d'antenne (202) d'un agencement d'antenne (109, 201) ou inversement, ledit agencement d'antenne comportant une pluralité d'éléments d'antenne (202) pour émettre et/ou recevoir respectivement un des signaux radar en direction d'un produit de remplissage ou depuis le produit de remplissage ;
les guides d'ondes comportant respectivement une ouverture de guide d'ondes (802) côté antenne, les ouvertures de guide d'ondes étant disposées le long d'une troisième ligne (807), et l'écartement (803) entre au moins deux ouvertures de guide d'ondes (802) adjacentes et disposées le long de la troisième ligne étant inférieur ou égal à la moitié de la longueur d'onde du signal radar ; et
l'écartement (804) entre au moins deux éléments rayonnants (303) adjacents le long de la première ligne ou le long de la deuxième ligne étant supérieur à la moitié de la longueur d'ondes du signal d'émission.

2. Injection par guide d'ondes selon la revendication 1, dans laquelle l'écartement (804) entre des éléments rayonnants (303) adjacents le long de la première ligne ou le long de la deuxième ligne est égal au double de l'écartement entre des ouvertures de guide d'ondes (802) côté antenne adjacentes.

3. Injection par guide d'ondes selon l'une des revendications précédentes,
dans laquelle un élément rayonnant (303) sur deux est disposé le long de la première ligne (805) droite ;
les éléments rayonnants restants étant disposés le long de la deuxième ligne (806) parallèle à la première ligne (805) .

4. Injection par guide d'ondes selon l'une des revendications précédentes,
dans laquelle les éléments rayonnants (303) sont disposés au moins en partie sur différents niveaux.

5. Injection par guide d'ondes selon l'une des revendications précédentes,
dans laquelle au moins un des guides d'ondes (701) est un guide d'ondes courbe ou coudé, de telle sorte que l'élément rayonnant (303) associé au guide d'ondes n'est pas disposé directement en dessous de l'ouverture de guide d'ondes côté antenne, mais latéralement décalé par rapport à celle-ci.

6. Antenne de radar de niveau de remplissage (109) avec une injection par guide d'ondes selon l'une des revendications 1 à 5.

7. Antenne de radar de niveau de remplissage (109) selon la revendication 6, conçue sous la forme d'un système d'antennes à cornet.

8. Antenne de radar de niveau de remplissage (109) selon la revendication 6, conçue sous la forme d'une antenne cylindro-parabolique (201).

9. Antenne de radar de niveau de remplissage (109) selon l'une des revendications 6 à 8, conçue sous la forme d'un système d'antennes unidimensionnel.

10. Antenne de radar de niveau de remplissage selon l'une des revendications 6 à 8, conçue sous la forme d'un système d'antennes bidimensionnel.

11. Appareil de mesure de niveau de remplissage (105) avec une antenne de radar de niveau de remplissage (109) selon l'une des revendications 6 à 10.

12. Appareil de mesure de niveau de remplissage (105) selon la revendication 11, conçu pour déterminer une topologie d'une surface de produit de remplissage (104).
